Europäisches Patentamt

European Patent Office

Office européen des brevets

(19)

(11) Numéro de publication: **0 283 328**
**B1**

(12) **FASCICULE DE BREVET EUROPEEN**

(45) Date de publication du fascicule du brevet:
**04.04.90**

(21) Numéro de dépôt: **88400172.8**

(22) Date de dépôt: **27.01.88**

(51) Int. Cl.⁴: **B60T 8/18,** B60T 8/30,
B60G 15/06

(54) **Correcteur de freinage asservi à la charge d'un véhicule.**

(30) Priorité: **26.02.87 FR 8702538**

(43) Date de publication de la demande:
**21.09.88 Bulletin 88/38**

(45) Mention de la délivrance du brevet:
**04.04.90 Bulletin 90/14**

(84) Etats contractants désignés:
**DE ES GB IT**

(56) Documents cités:
**EP-A- 0 203 704**
**DE-A- 1 505 329**
**DE-A- 3 224 295**
**US-A- 4 040 674**

**PATENT ABSTRACTS OF JAPAN,**
**vol. 8, no. 16 (M-270)[1453], 24 janvier 1984; &**
**JP-A-58 177 755 (MITSUBISHI JIDOSHA KOGYO**
**K.K.) 18-10-1983**

(73) Titulaire: **BENDIX France, 126, rue de Stalingrad,**
**F-93700 Drancy(FR)**

(72) Inventeur: **Levrai, Roland, 9 Bis Avenue Gaston**
**Monmousseau, F-93240 Stains(FR)**

(74) Mandataire: **Timoney, Ian Charles Craig et al, BENDIX**
**FRANCE Division Technique Service Brevets Bendix**
**Europe 126, rue de Stalingrad, F-93700 Drancy(FR)**

## Description

La présente invention se rapporte aux correcteurs de freinage, et, plus particulièrement à un tel correcteur asservi à la charge d'un véhicule.

Il est souhaitable, pour des raisons d'économie de place et de nombre de pièces, de relier un correcteur de freinage directement à la suspension d'un véhicule en vue de faire varier le freinage des roues du véhicule en fonction de sa charge.

On connaît du document GB-A- 1 577 029 un correcteur de freinage asservi à la charge d'un véhicule, qui est disposé à une extrémité d'un ressort du suspension du véhicule et relié au ressort par un ensemble de cames de façon à faire varier la pression de freinage en fonction de la charge. Ce dispositif présente les inconvénients en ce qu'il comprend un nombre important de pièces, ce qui le rend onéreux et peu fiable.

Pour pallier les inconvénients d'une liaison mécanique entre un correcteur et la suspension d'un véhicule on a proposé de relier le correcteur hydrauliquement à la suspension.

On connaît du document FR-A-1 288 940 une installation de freinage pour véhicule dans laquelle un émetteur hydraulique est monté entre un ressort-lame de suspension et le châssis du véhicule, cet émetteur étant relié hydrauliquement à un correcteur de freinage de façon à faire fonctionner ce dernier en fonction de la charge du véhicule.

Ce dispositif présente des inconvénients en ce qu'il est encombrant et peut gêner le déplacement de la suspension. De plus, ce dispositif ne se prête pas à être utilisé avec un ressort de suspension hélicoïdal.

La présente invention a donc pour but de proposer un correcteur de freinage asservi à la charge d'un véhicule, qui est de construction simple, peu encombrant, fiable et d'installation facile.

Le document JP-A 58 177 755 décrit un tel correcteur de freinage asservi à la charge d'un véhicule, dans lequel un recevoir élastique de pression est disposé entre un ressort de suspension et le châssis du véhicule.

Un tel correcteur ne peut pas être mis en oeuvre dans un véhicule dont l'élément de suspension comprend un amortisseur à piston dont la tige est entourée d'un manchon élastique car la force reprise par ce manchon n'est pas prise en compte par le réservoir. Il en résulterait alors une discontinuité nuisible dans la correction effectuée.

La présente invention a donc pour but d'obvier à cet inconvénient.

L'invention concerne donc un correcteur de freinage destiné à être asservi à la charge d'un véhicule ayant au moins un élément de suspension monté entre une plaque de support solidaire du chassis du véhicule et une partie suspendue du véhicule, l'élément de suspension comprenant coaxialement un amortisseur dont une extrémité est connectée à la partie suspendue, un ressort de suspension, une tige d'actionnement dont une extrémité est reliée au piston de l'amortisseur, et un manchon en matériau élastomère disposé autour de la tige dont l'autre extrémité ainsi que les extrémités correspondantes du ressort de suspension et du manchon sont montées fixes sur la plaque de support. Le correcteur est muni d'un capteur fluidique de pression et comprend un corps creusé d'un alésage dans lequel est monté à coulissement un piston agencé de façon à coopérer avec un élément de clapet pour commander un passage de fluide entre une entrée et une sortie du correcteur. Le capteur fluidique de pression comprend un piston annulaire monté à coulissement étanche dans un cylindre annulaire ménagé dans un collier annulaire monté fixe autour de l'amortisseur.

Selon l'invention, l'autre extrémité du ressort de suspension vient en appui dans une partie annulaire d'un élément d'appui monté à coulissement autour de l'amortisseur et en butée contre le piston annulaire, cet élément d'appui ayant une partie centrale en forme de gobelet entourant l'autre extrémité de l'amortisseur en regard de l'autre extrémité du manchon, la partie centrale en forme de gobelet étant solidaire de la partie annulaire. D'autres caractéristiques et avantages de la présente invention ressortiront de la description suivante d'un mode de réalisation donné à titre d'exemple, faite en relation avec le dessin annexé, dans lequel :

– la Figure 1 est une vue schématique en coupe longitudinale d'un correcteur de freinage asservi à la charge d'un véhicule, donnée à titre explicatif ; et
– la Figure 2 est une vue en coupe longitudinale selon un mode de réalisation de l'invention.

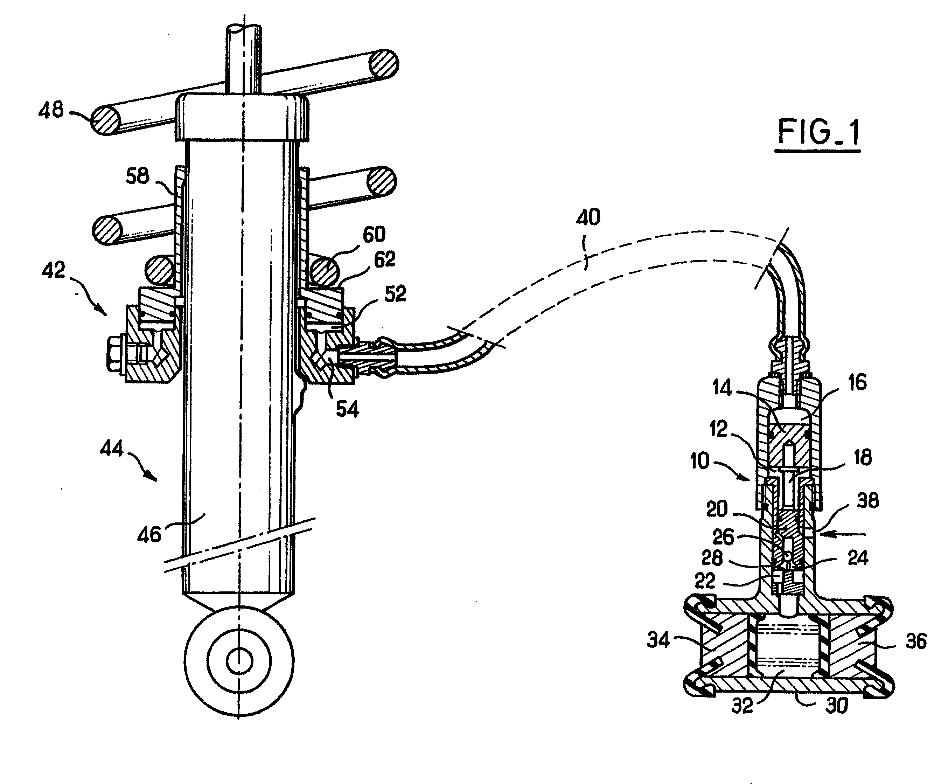

Comme représenté sur la figure 1, un correcteur de freinage 10 qui, dans l'exemple illustré, est formé intégralement avec un cylindre de roue d'un frein à tambour (non-représenté) comprend un corps de correcteur 11 qui comporte un alésage étagé 12. Un piston de commande 14 est monté à coulissement étanche dans une partie 16, de diamètre élargi, de l'alésage étagé 12. Le piston de commande 14 comporte une tige d'actionnement 18 qui prend appui sur un piston 20 monté à coulissement étanche dans la partie 22, de diamètre réduit, de l'alésage étagé 12. Le piston 20 est muni d'un siège de clapet 24 destiné à être fermé, sélectivement, par une bille 26 coopérant avec une tige 28 solidaire du fond de l'alésage étage 12. Le cylindre de roue comprend un corps 30 pourvu d'un alésage 32 dans lequel sont montés, à coulissement étanche, deux pistons d'actionnement 34,36. Le corps de correcteur 11 comporte une entrée hydraulique 38 destinée à être reliée à une source de fluide hydraulique sous pression, par exemple un maître-cylindre (non représenté).

La partie 16 de l'alésage étage 12 est reliée par un tuyau flexible 40 à un capteur fluidique de pression 42 monté sur un élément de suspension 44. L'élément de suspension 44 comprend un amortisseur 46 et un ressort de suspension 48 et il est destiné à être monté entre le châssis et une partie suspendue du véhicule (non-représentés).

Le capteur de pression fluidique 42 qui , dans l'exemple illustré est un capteur hydraulique comprend un collier annulaire 50 monté fixe sur l'amortisseur 46 et présente une gorge annulaire 52 qui est reliée au tuyau flexible 40 par un passage 54. Un piston annulaire 56 est monté à coulissement étanche dans la gorge annulaire 52 et comporte un manchon tubulaire 58 qui est disposé, avec un faible jeu, autour de l'amortisseur 46. Une extrémité 60 du ressort de suspension 48 vient en appui contre une surface annulaire 62 du piston annulaire 56.

Le fonctionnement du correcteur s'établit comme suit :

Une augmentation de la charge du véhicule provoque une variation correspondante dans la force exercée par le ressort de suspension 48 sur le piston annulaire 56, entraînant une variation de pression effective de la gorge annulaire 52. Le déplacement du piston annulaire 56 provoque une action correspondante sur le piston de commande 14 qui, par l'intermédiaire de la tige d'actionnement 18 et du piston 20, agit sur la bille 26, controlant ainsi l'écoulement de fluide entre le maître-cylindre et le cylindre de roue 30. De manière analogue, une réduction de la charge du véhicule agit en sens inverse sur le piston annulaire 56 de façon à faire diminuer la pression de fluide dans la gorge annulaire 52, entraînant la fermeture de la bille 26 sur son siège 24.

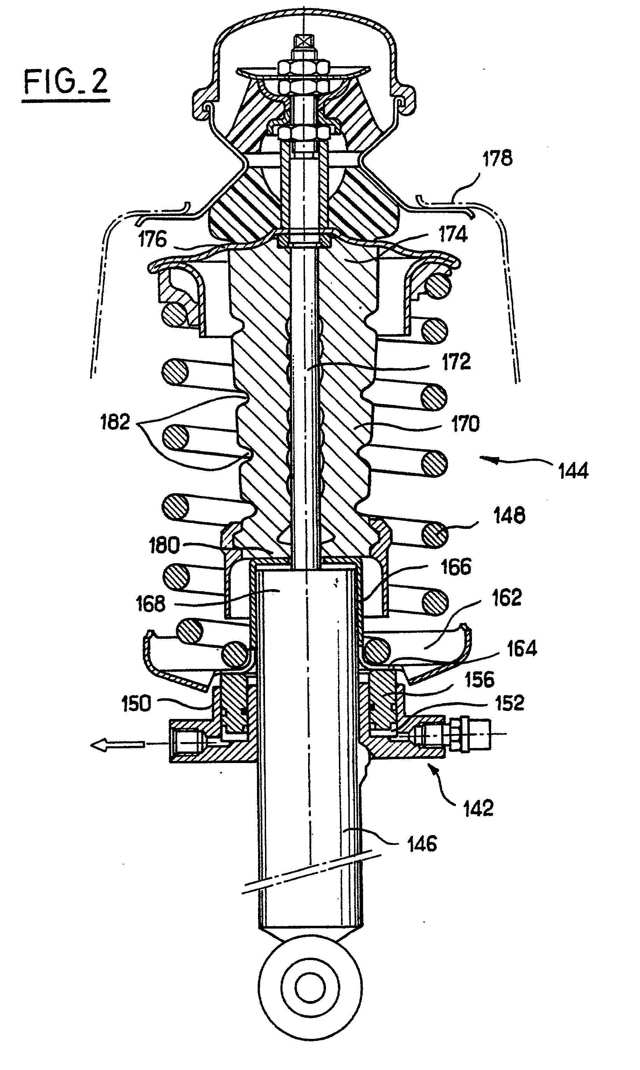

Sur la figure 2 est représenté un mode de réalisation selon l'invention de l'élément de suspension qui comprend un deuxième moyen pour transmettre l'effort de suspension au piston annulaire. Dans ce mode de réalisation l'élément de suspension 144 comprend un élément d'appui 162 qui est monté à coulissement autour de l'amortisseur 146 et qui est en butée contre le piston annulaire 156 du capteur de pression 142. L'élément d'appui 162 comprend une partie annulaire 164, sur laquelle vient en appui une extrémité 160 du ressort de suspension 148, et une partie 166 en forme de gobelet qui entoure une extrémité 168 de l'amortisseur 146. L'élément de suspension 144 comprend de plus, un manchon 170 en matériau élastomère qui est disposé autour d'une tige du piston 172 de l'amortisseur 46 et dont une extrémité 174 est montée fixe sur une plaque de support 176 solidaire avec le châssis 178 du véhicule.

Le manchon 170 a une longueur telle que, quand le véhicule sur lequel le dispositif est monté est vide, l'extrémité 180 ne vient pas en appui contre l'élément d'appui 162. Alors, seul l'effort du ressort de suspension 148 est transmis au piston annulaire 156. Si la charge du véhicule augmente, l'amortisseur 146 est comprimé et l'extrémité 180 du manchon 170 vient en butée contre la partie 166 de l'élément d'appui 162 pour exercer une force supplémentaire sur le piston annulaire 156. Le manchon 170 comporte des rainures annulaires 182 qui assurent une déformation progressive du manchon 170 quand la charge du véhicule augmente. L'effort appliqué sur le piston annulaire 156 par la combinaison du ressort de suspension 148 et du manchon 170 reflète mieux la charge du véhicule.

Il est envisagé que le capteur fluidique pourrait être un capteur pneumatique, ce qui nécessiterait une adaptation de la forme et des dimensions du piston annulaire 56, 156 et du piston 14 du correcteur, comme cela est bien connu de l'homme de métier.

Le capteur du correcteur suivant l'invention présente, entre autres avantages, celui d'utiliser comme support un amortisseur préexistant dans le véhicule, ce qui permet d'éviter l'utilisation d'un support particulier pour ce capteur.

## Revendications

Correcteur de freinage (10) destiné à être asservi à la charge d'un véhicule ayant au moins un élément de suspension (144) monté entre une plaque de support (176) solidaire du châssis (178) du véhicule et une partie suspendue du véhicule, ledit élément de suspension (144) comprenant coaxialement un amortisseur (146) dont une extrémité est connectée à ladite partie suspendue, un ressort de suspension (148), une tige d'actionnement (172) dont une extrémité est reliée au piston dudit amortisseur (146), et un manchon (170) en matériau élastomère disposé autour de ladite tige (172) dont l'autre extrémité ainsi que les extrémités correspondantes dudit ressort de suspension (148) et dudit manchon (170) sont montées fixes sur ladite plaque de support (176), ledit correcteur (10) étant muni d'un capteur fluidique de pression (142), et comprenant un corps (11) creusé d'un alésage (12) dans lequel est monté à coulissement un piston (20) agencé de façon à coopérer avec un élément de clapet (26) pour commander un passage de fluide entre une entrée (38) et une sortie (32) du correcteur (10), ledit capteur fluidique de pression (142) comprenant un piston annulaire (156) monté à coulissement étanche dans un cylindre annulaire (150) ménagé dans un collier annulaire (150) monté fixe autour dudit amortisseur (146), caracterisé en ce que l'autre extrémité dudit ressort de suspension (148) vient en appui dans une partie annulaire (164) d'un élément d'appui (162) monté à coulissement autour dudit amortisseur (146) et en butée contre ledit piston annulaire (156), ledit élément d'appui (162) ayant une partie centrale (166) en forme de gobelet entourant l'autre extrémité dudit amortisseur (146) en regard de l'autre extrémité dudit manchon (170), ladite partie centrale (166) en forme de gobelet étant solidaire de ladite partie annulaire (164).

## Patentansprüche

Bremskorrektureinrichtung (10), dazu bestimmt, der Last eines Fahrzeuges nachgeregelt zu werden, mit wenigstens einem Einhängeelement (144), das zwischen einer mit dem Fahrgestell (178) des Fahrzeuges fest verbundenen Trägerplatte (176) und einem eingehängten Teil des Fahrzeuges gelagert ist, wobei das Einhängeelement (144) koaxial einen Dämpfer (146), wovon ein Ende mit dem eingehängten Teil verbunden ist, eine Einhängefeder (148), eine Betätigunsstange (172), wovon ein Ende mit dem Kolben des Dämpfers (146) verbunden ist, sowie eine aus einem Elastomer bestehende Hülse (170) umfaßt, die um die Stange (172) herum angeordnet ist, wovon das andere Ende sowie die entsprechenden Enden der Einhängefeder (148) und der Hülse (170) auf der Trägerplatte (176) fest angebracht sind, wobei die Korrektureinrichtung (10) mit einem Fluiddruckfühler (142) versehen ist und einen mit einer Bohrung versehenen Körper (11) umfaßt, in welchem ein Kolben (20) gleitend gelagert ist, der so angeordnet ist, daß er mit einem Ventilelement (26) zusammenwirkt, um einen Durchlauf des Fluids zwischen einem Eintritt (38) und einem Austritt (32) der Korrektureinrichtung (10) zu steuern, wobei der Fluiddruckfühler (142) einen ringförmigen Kolben (156) umfaßt, der in einem ringförmigen Zylinder (150) gleitend und abgedichtet gelagert ist, welcher in einer um diesen Dämpfer (146) herum fest angebrachten ringförmigen Schelle (150) vorgesehen ist, dadurch gekennzeichnet, daß das andere Ende der Einhängefeder (148) sich auf einem ringförmigen Teil (164) eines Abstützelementes abstützt, das um den Dämpfer (146) herum gleitend gelagert ist und gegen den ringförmigen Kolben (156) anschlägt, wobei das Abstützelement (162) einen becherförmigen Zentralteil (166) aufweist, der das andere Ende des Dämpfers (146) gegenüber dem anderen Ende der Hülse (170) umgibt, wobei der becherförmige Zentralteil (166) mit dem ringförmigen Teil (164) fest verbunden ist.

## Claims

Brake corrector (10) intended to be dependent on the load of a vehicle, having at least one suspension element (144) mounted between a support plate (176) fixed to the chassis (178) of the vehicle and a suspended part of the vehicle, the said suspension element (144) comprising coaxially a shock absorber (146), one end of which is connected to the said suspended part, a suspension spring (148), an actuating rod (172), one end of which is connected to the piston of the said shock absorber (146), and a sleeve (170) made of elastomeric material and arranged around the said rod (172), of which the other end and the corresponding ends of the said suspension spring (148) and of the said sleeve (170) are mounted fixedly on the said support plate (176), the said corrector (10) being equipped with a fluidic pressure sensor (142) and comprising a body (11) having a bore (12), in which is slideably mounted a piston (20) designed to interact with a valve element (26) in order to control a fluid passage between an inlet (38) and an outlet (32) of the corrector (10), the said fluidic pressure sensor (142) comprising an annular piston (156) mounted sealingly slideably in an annular cylinder (150) formed in an annular collar (150) mounted fixedly round the said shock absorber (146), characterized in that the upper end of the said suspension spring (148) comes to bear in an annular part (164) of a bearing element (162) mounted slideably round the said shock absorber (146) and up against the said annular piston (156), the said bearing element (162) having a beaker-shaped central part (166) surrounding the other end of the said shock absorber (146) confronting the other end of the said sleeve (170), the said beaker-shaped central part (166) being fixed to the said annular part (164).

FIG_1

FIG. 2